# EUROPÄISCHE PATENTSCHRIFT

(11) **EP 2 452 826 B1**
(45) Veröffentlichungstag und Bekanntmachung des Hinweises auf die Patenterteilung: **15.01.2014**
(21) Anmeldenummer: 12000584.8
(22) Anmeldetag: 07.09.2004
(51) Int. Cl.: B42D 15/00, G03H 1/00, G03H 1/18, B42D 15/10

(54) **Foliensicherheitselement mit Durchbrechungsbereich**
Film security element comprising a perforated area
Elément de sécurité sous forme de film perforé

(30) Priorität: 11.09.2003 DE 10342252
(43) Veröffentlichungstag der Anmeldung: 16.05.2012
(62) Teilanmeldung aus: 04764914.0
(73) Patentinhaber: Giesecke & Devrient GmbH, 81677 München (DE)
(72) Erfinder: Tauber, Reinhard, 8111 Judendorf-Strassengel (AT)
(74) Vertreter: Metzler, Volker

(56) Entgegenhaltungen:
- EP-A1- 0 498 186
- DE-A1- 1 632 482
- DE-A1- 2 558 056
- DE-A1- 3 932 505
- DE-A1- 4 334 847
- DE-A1- 10 226 114
- DE-A1- 19 729 918
- US-A- 3 711 177
- US-A- 4 126 373

## Beschreibung

Die Erfindung betrifft einen Datenträger, wie ane Banknote, Wertpapier oder Ausweiskarte, mit einem auf seiner Oberfläche angeordneten Foliensicherheitselement mit einem Foliensubstrat, das mit einem Sicherheitsmerkmal versehen ist.

Datenträger und insbesondere Wertdokumente werden zur Absicherung in der Regel mit Sicherheitselementen ausgestattet, die eine Überprüfung der Echtheit des Datenträgers gestatten und zugleich als Schutz vor unerlaubter Reproduktion des Datenträgers dienen. Als Sicherheitselemente kommen vielfach optisch variable Elemente zum Einsatz, die dem Betrachter unter unterschiedlichen Betrachtungswinkeln einen unterschiedlichen Bildeindruck, beispielweise einen unterschiedlichen Farbeindruck, vermitteln.

Zur Steigerung der Fälschungssicherheit ist bekannt, solche Sicherheitselemente mit durchgehenden Öffnungen in den Wertdokumenten zu kombinieren. Beispielsweise wird in der Druckschrift WO 95/10420 vorgeschlagen, in ein Wertdokument nach seiner Herstellung eine durchgehende Öffnung zu stanzen und diese mit einer Abdeckfolie einseitig zu verschließen, die die Öffnung allseits überragt. Ist die Abdeckfolie zumindest in Teilbereichen transparent, scheint der Untergrund beim Kopieren des Wertdokuments7 durch und macht die Kopie somit als solche erkennbar. Die Abdeckfolie kann zusätzlich ein Sicherheitsmerkmal, wie etwa ein Hologramm, aufweisen.

Die DE 102 26 114 A1 betrifft ein Sicherheitselement für Sicherheitspapiere, Wertdokumente, Ausweiskarten, das selbsttragend ausgestaltet ist, und beschreibt u.A. eine Banknote mit einer durchgehenden Öffnung, die beidseitig mit solchen Sicherheitselementen verschlossen ist.

Der Erfindung liegt die Aufgabe zugrunde, einen Datenträger mit einem Sicherheitselement der eingangs genannten Art anzugeben, das eine wirkungsvolle Absicherung des datenträgers erlaubt. Der abgesicherte Datenträger soll sowohl schwer nachzustellen sein als auch eine Überprüfung der Echtheit oder Unversehrtheit durch einen Laien ermöglichen

Diese Aufgabe wird durch den Datenträger mit den Merkmalen des Hauptanspruchs gelöst. Weiterbildungen der Erfindung sind in den Unteransprüchen angegeben.

Das Foliensieherheitselement des Datenträgers weist nach einem Aspekt der Erfindung einen Durchbrechungsbereich mit zumindest einer das Element durchbrechenden Aussparung auf. In einer bevorzugten Ausgestaltung enthält der Durchbrechungsbereich dabei eine Mehrzahl von das Element durchbrechenden Aussparungen in Form von Mustern, Zeichen oder Codierungen. Der Durchbrechungsbereich kann auch eine ausgedehnte Aussparung aufweisen, durch die ein darunter liegendes Sicherheitsmerkmal des Datenträgers erkennbar ist.

Die Erfindung beruht in diesem Aspekt auf dem Gedanken, dass ein solcher Durchbrechungsbereich vor allem dann schwer nachzuahmen ist, wenn er eine Vielzahl kleiner, in einem charakteristischen Muster angeordneter Aussparungen enthält oder einen mit kleinräumigen Strukturen versehenen Rand aufweist. Die Aussparungen können in Form eines Bildmotivs, etwa eines stilisierten Portraits oder eines architektonischen Motivs, oder in Form von Zahlen- oder Buchstabenzeichen angeordnet sein, die eine bestimmte Information darstellen, wie etwa die Denomination oder das Ausgabeland einer Banknote.

Gleichzeitig ist der Durchbrechungsbereich für den Benutzer haptisch leicht fühl- und erfassbar. Das Vorhandensein oder Nichtvorhandensein eines Durchbrechungsbereichs kann somit vielfach ohne optische Kontrolle sicher festgestellt werden. Es versteht sich, dass das Vorhandensein des Durchbrechungsbereichs auch maschinell überprüft werden kann. In Verbindung mit einem unter dem Durchbrechungsbereich angeordneten Sicherheitselement ergeben sich zusätzliche Absicherungsmöglichkeiten, die weiter unten genauer beschrieben werden.

Ein erfindungsgemäßes Foliensicherheitselement weist vorzugsweise einen Fensterbereich auf, durch den ein darunter liegendes Sicherheitsmerkmal des Datenträgers erkennbar ist. Wie der Durchbrechungsbereich kann auch der Fensterbereich mit Vorteil in Form von Mustern, Zeichen oder einer Codierung ausgebildet sein.

Die Erfindung betrifft einen Datenträger, wie eine Banknote, ein Wertpapier oder eine Ausweiskarte, auf dessen Oberfläche ein Foliensicherheitselement der beschriebenen Art angeordnet ist. Dadurch kann eine Wechselbeziehung zwischen den Informationen auf dem Datenträger und den Informationen auf dem Folienelement hergestellt werden, durch die Fälschungs- oder Manipulationsversuche verhindert oder zumindest leicht erkennbar werden.

In der bevorzugten Ausgestaltung weist der Datenträger ein von dem Foliensicherheitselement zumindest teilweise überdecktes Sicherheitsmerkmal auf, das durch den Durchbrechungsbereich oder den Fensterbereich visuell und/ oder maschinell erkennbar ist. Durch die Überdeckung wird das Sicherheitsmerkmal geschützt und ist für Eingriffe nicht oder nur schwer zugänglich. Zugleich kann das Sicherheitsmerkmal über den Durchbrechungs- oder Fensterbereich des Foliensicherheitselements leicht nachgewiesen werden.

Gemäß einer vorteilhaften Ausgestaltung des erfindungsgemäßen Datenträgers ist das Sicherheitsmerkmal in das Innere des Datenträgers eingebettet. Beispiele für eingebettete Sicherheitsmerkmale stellen Wasserzeichen oder Melierfasern in einem Sicherheitspapier dar.

Alternativ kann der Datenträger in einem Teilbereich mit einer das Sicherheitsmerkmal enthaltenden Sicherheitsschicht versehen sein. Bevorzugt enthält die Sicherheitsschicht dabei zumindest ein Sicherheitsmerkmal, das aus der Gruppe der lumineszierenden, metallischen, magnetischen oder elektrisch leitfähigen Stoffe oder der optisch variablen Pigmente ausgewählt ist. Enthält die Sicherheitsschicht eines Wertdokuments beispielsweise einen Lumineszenzstoff, so kann eine Kopie des Dokuments leicht erkannt werden, da sich Lumineszenzstoffe mit gängigen Farbkopiergeräten nicht oder nicht originalgetreu reproduzieren lassen.

Nach einer bevorzugten Ausgestaltung enthält der Datenträger einen transparenten oder transluzenten Bereich, der durch den Durchbrechungsbereich oder den Fensterbereich erkennbar ist. Ein transluzenter Bereich kann bei einem Wertdokument beispielsweise durch Einwirken bestimmter Substanzen auf das Papiersubstrat, wie etwa konzentrierte Schwefelsäure, Zinkchlorid, Fette, Harze, Wachse, synthetische Polymere, wie Terpenpolymere, Polyurethane, Methacrylharz, erzeugt werden.
Enthält der Datenträger ein transparentes Substrat, etwa eine transparente Kunststofffolie, so kann der transparente Bereich einfach durch eine oder mehrere Lücken in einer aufgebrachten opaken oder semitransparenten Deckschicht gebildet sein. Insgesamt ergibt sich ein durchgehend transparenter oder transluzenter Bereich, der dem Datenträger in Durchsicht ein auffälliges und charakteristisches Erscheinungsbild verleiht.

Gemäß einer vorteilhaften Weiterbildung der Erfindung enthält der Datenträger zumindest zwei Sicherheitsmerkmale mit unterschiedlichen physikalischen Eigenschaften, die durch den Durchbrechungsbereich oder den Fensterbereich visuell und/ oder maschinell erkennbar sind. Die Sicherheitsmerkmale können dabei nebeneinander, übereinander, oder einander teilweise überlappend angeordnet sein. Ein erstes Sicherheitsmerkmal kann etwa wegen seiner einfachen Überprüfbarkeit für den Betrachter ausgewählt sein, während ein zweites Sicherheitsmerkmal unter dem Gesichtspunkt einer besonders hohen Fälschungssicherheit ausgewählt ist.

Beispielsweise können die beiden Sicherheitsmerkmale durch zwei voneinander getrennte Zonen der Sicherheitsschicht gebildet sein, die verschiedene lumineszierende Markierungsstoffe enthalten. Der erste Markierungsstoff weist dabei etwa eine Emissionswellenlänge im sichtbaren Spektralbereich auf, so dass er nach Anregung mit einer geeigneten Quelle problemlos mit bloßem Auge nachgewiesen werden kann. Der zweite Markierungsstoff weist dagegen eine Emissionswellenlänge im infraroten Spektralbereich auf, insbesondere im Bereich oberhalb von etwa 1100 bis 1200 nm, so dass die Lumineszenz dieses Markierungsstoffs mit den weit verbreiteten Silizium-Infrarotdetektoren nicht nachgewiesen werden kann, sondern aufwändigere Detektoren erfordert, die nicht jedermann zur Verfügung stehen.

Der Durchbrechungsbereich oder Fensterbereich des Foliensicherheitselements bildet nach einer vorteilhaften Weiterbildung der Erfindung visuell und/oder maschinell erfassbare Informationen, die zu anderen Informationen auf dem Datenträger oder dem Foliensicherheitselement inhaltsgleich sind oder diese ergänzen. Beispiele für derartige Informationen stellen die Denomination einer Banknote, die Währung, das Emissionsdatum, das Land, die Druckerei oder anderes Ausstattungsmerkmal des Datenträgers dar. Eine oder mehrere der genannten Informationen können bei der Echtheitsprüfung ausgelesen und weiterverarbeitet werden. Durch eine solche Entsprechung kann eine Beziehung zwischen Datenträger und Foliensicherheitselement hergestellt werden, die Manipulationen, wie etwa das Ablösen und Übertragen des Foliensicherheitselements auf einen anderen Datenträger, leicht offenbar macht.

Bei einer zweckmäßigen Ausgestaltung der Erfindung ist zumindest ein Teil der Informationen auf dem Datenträger durch den Durchbrechungsbereich oder den Fensterbereich visuell und/ oder maschinell erfassbar.

Gemäß der Erfindung weist nicht nur das Foliensicherheitselement einen Durchbrechungsbereich auf, sondern gleichzeitig auch der Datenträger. Die Durchbrechungsbereiche sind deckungsgleich. Der Durchbrechungsbereich im Datenträger wird von der Seite, die von der Datenträgerseite, die das Foliensicherheitselement trägt, abgewandt ist, mit einer weiteren Folie abgedeckt.

In einer weiteren Ausgestaltung der Erfindung weist nicht nur das Foliensicherheitselement einen Fensterbereich auf, sondern gleichzeitig auch der Datenträger. Die Fensterbereiche überlappen sich vorzugsweise zumindest teilweise und besonders bevorzugt sind sie deckungsgleich. In einer weiteren Variante wird der Fensterbereich im Datenträger von der der Foliensicherheitselement tragenden Datenträgerseite abgewandten Seite mit einer weiteren Folie abgedeckt.

Die Foliensicherheitselemente können einen Sicherheitsstreifen, einen Sicherheitsfaden und insbesondere ein flächiges, auf einen Datenträger appliziertes Transferelement bilden.

Als "Transferelement" im Sinne der Erfindung wird ein Foliensicherheitselement bezeichnet, das auf einer separaten Trägerschicht, beispielsweise einer Kunststofffolie, in der umgekehrten Reihenfolge, wie sie später auf dem Sicherheitspapier zu liegen kommt, vorbereitet wird und anschließend mittels einer Klebstoff- oder Lackschicht in den gewünschten Umrissformen auf das Sicherheitspapier übertragen wird. Die Trägerschicht kann nach dem Übertrag von dem Schichtaufbau des Sicherheitselements abgezogen werden oder als Schutzschicht als fester Bestandteil des Sicherheitselements auf dem Schichtaufbau verbleiben.

Die einzelnen Transferelemente können auf der Trägerschicht als separate Einzelelemente in den zu übertragenden Umrissformen vorbereitet werden. Alternativ wird die Schichtfolge der Transferelemente in kontinuierlicher Form auf der Trägerschicht vorgesehen. Derartige Trägerschichten mit voneinander beabstandeten einzelnen Transferelementen oder einem kontinuierlich verlaufenden Schichtaufbau werden im Folgenden als "Transfermaterial" bezeichnet und die auf der Trägerschicht angeordnete Schichtfolge des Sicherheitselements als "Übertragungslage".

Im Falle der kontinuierlichen Übertragungslage wird das Transfermaterial anschließend über eine Klebstoffschicht mit dem Sicherheitspapier verbunden und die Klebstoffschicht über entsprechende Prägewerkzeuge aktiviert, so dass die Übertragungslage nur in den aktivierten Bereichen an dem Sicherheitspapier haftet. Alle übrigen Bereiche werden anschließend mit der Trägerschicht abgezogen. Alternativ kann auch die Kleberschicht in Form des zu übertragenden Sicherheitselements ausgeführt sein. Als Klebstoffe werden vorzugsweise Heißschmelzkleber verwendet. Es können jedoch auch beliebige andere Klebstoffe, wie Reaktionslacke, verwendet werden.

Das Foliensicherheitselement ist in einer vorteilhaften Weiterbildung zur weiteren Erhöhung der Fälschungssicherheit im Register auf den Datenträger aufgebracht. Dabei kommt insbesondere eine Aufbringung im Register zur Gesamtgeometrie des Datenträgers oder zu einem eingebetteten oder aufgebrachten Merkmal des Datenträgers infrage. Insbesondere ist das Foliensicherheitselement so aufgebracht, dass der Durchbrechungs- oder Fensterbereich des Foliensicherheitselements im Register zu dem genannten Merkmal des Datenträgers steht, so dass dieses für den Betrachter oder ein Lesegerät durch den Durchbrechungs- oder Fensterbereich hindurch erkennbar ist.

Bei dem eingebetteten oder aufgebrachten Merkmal des Datenträgers kann es sich beispielsweise um aufgedruckte Muster, Zeichen oder Codierungen, um ein Papiermerkmal, ein Wasserzeichen oder ein anderes informationshaltiges Sicherheitsmerkmal des Datenträgers handeln.

Es versteht sich, dass ein flächiger Datenträger nicht nur auf einer Seite, sondern auch auf beiden Seiten jeweils mit einem Foliensicherheitselement der beschriebenen Art versehen werden kann. Beispielsweise kann ein transparenter oder transluzenter Bereich des Datenträgers zwischen zwei Föliensicherheitselemente mit entsprechend angeordneten Durchbrechungsbereichen oder Fensterbereichen eingebettet sein, um einen durchgehenden, durchscheinenden Bereich des Datenträgers zu schaffen.

Um einen Datenträger mit einem Foliensicherheitselement nach der Erfindung herzustellen wird bevorzugt
- ein Foliensicherheitselement bereitgestellt, das ein Foliensubstrat mit einem Sicherheitsmerkmal umfasst,
- ein Datenträger-Rohkörper bereitgestellt,
- ein Durchbrechungsbereich in das Foliensicherheitselement eingebracht, der zumindest eine das Element durchbrechende Aussparung umfasst, und
- das durchbrochene Foliensicherheitselement auf den Datenträger-Rohkörper, der einen Durchbrechungsbereich aufweist, aufgebracht.

Der Begriff Datenträger-Rohkörper bezeichnet dabei den Datenträger ohne Foliensicherheitselement, also etwa eine bedruckte Banknote oder ein Sicherheitspapier, das mit dem Foliensicherheitselement versehen werden soll.

Der Durchbrechungsbereich wird in dem Foliensicherheitselement bzw. Datenträger mit Vorteil durch Perforierung und/oder Stanzung erzeugt.

Zur Herstellung eines Datenträgers mit einem Foliensicherheitselement mit Fensterbereich wird bevorzugt
- ein Foliensicherheitselement bereitgestellt, das ein Foliensubstrat mit einem Sicherheitsmerkmal umfasst,
- ein mit einem Sicherheitsmerkmal versehener Datenträger-Rohkörper bereitgestellt,
- ein Fensterbereich in das Foliensicherheitselement eingebracht, und
- das Foliensicherheitselement so auf den Datenträger-Rohkörper aufgebracht, dass das Sicherheitsmerkmal des Datenträgers durch den Fensterbereich erkennbar ist.

Es ist nicht erforderlich, dass das Sicherheitsmerkmal durch den Fensterbereich vollständig erkennbar ist, wenn dies in manchen Fällen, etwa bei einem eingebetteten Wasserzeichen auch vorteilhaft sein kann. In ändern Fällen, etwa wenn das Sicherheitsmerkmal durch eine Farbschicht, eine Lumineszenzschicht oder eine Schicht mit optisch variablen Effekten gebildet ist, ist schon der einfachen Herstellung halber eine teilweise Überdeckung des Sicherheitsmerkmals vorzuziehen. Dazu kann, wie weiter unten im Detail beschrieben, ein überstehender Bereich des Sicherheitsmerkmals als Orientierungsmerkmal bei einer maschinellen Prüfung des Datenträgers dienen.

Der Fensterbereich wird vorzugsweise durch teilweises Entfernen einer opaken Deckschicht, insbesondere durch Demetallisation einer Metallschicht des Foliensicherheitselements erzeugt.

Bei beiden Verfahrensvarianten kann der Datenträger in einem Teilbereich mit einer Sicherheitsschicht versehen werden, die ein Sicherheitsmerkmal enthält. Die Sicherheitsschicht wird dabei mit Vorteil aufgedruckt, aufgespritzt oder aufgerakelt, insbesondere im Siebdruck, Flexodruck oder Tiefdruck aufgebracht. Das Aufbringen des Foliensicherheitselements auf den Datenträger-Rohkörper erfolgt bevorzugt im Transferverfahren.

Das Foliensicherheitselement ist bei den vorhergehenden Ausführungen stets auf den Datenträger aufgebracht.

Weitere Beispiele im Zusammenhang mit der Erfindung werden nachfolgend anhand der Figuren erläutert. Zur besseren Anschaulichkeit wird in den Figuren auf eine maßstabs- und proportionsgetreue Darstellung verzichtet.

Es zeigen im Einzelnen:
- Fig. 1: eine schematische Darstellung einer Banknote mit einem aufgebrachten Folienapplikationsstreifen,
- Fig. 2 bis 4: weitere Banknoten mit aufgebrachten Folienapplikationsstreifen,
- Fig. 5: eine Banknote mit zwei verschiedenen Folienapplikationselementen in Patchform und
- Fig. 6: einen Schnitt durch eines der Folienapplikationselemente von Fig. 5 entlang der Linie VI-VI.

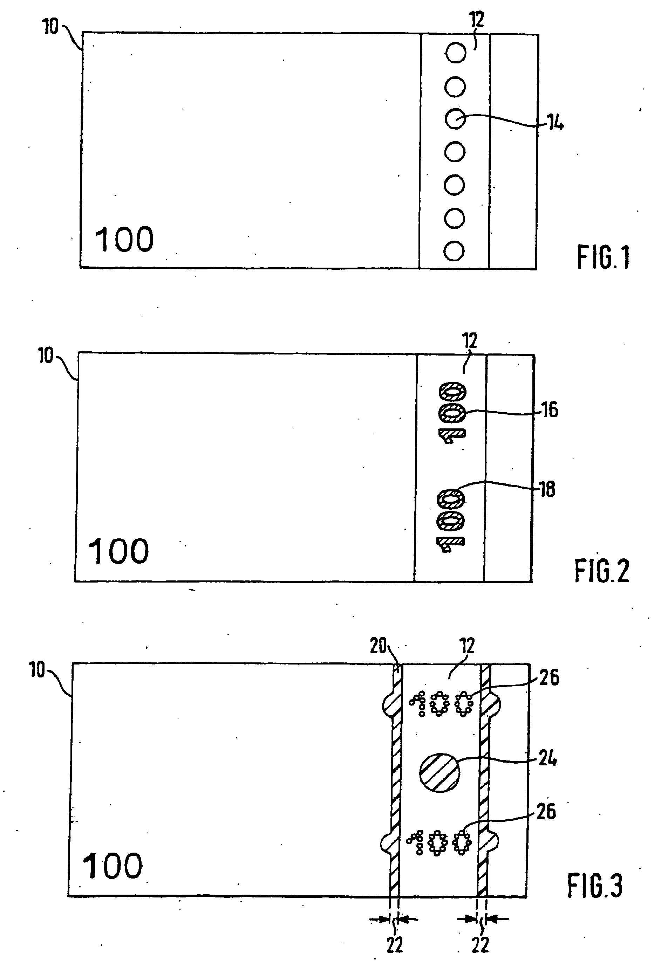

Fig. 1 zeigt eine schematische Darstellung einer Banknote 10, die mit einem mittels Heißschmelzkleber aufgebrachten Hologramm-Folienapplikationsstreifen 12 versehen ist. Der Folienapplikationsstreifen 12 weist eine Kunststoffschicht bzw. Lackschicht als Trägerfolie auf, die mit Beugungsstrukturen in Form einer Reliefstruktur versehen ist. Auf die Kunststoffschicht ist eine metallische Reflexionsschicht, typischerweise aus Aluminium, aufgebracht. Derartige Folienapplikationsstreifen sind dem Fachmann an sich bekannt, so dass auf eine genauere Beschreibung verzichtet werden kann.

Aus dem Folienapplikationsstreifen 12 sind nun eine Reihe von Öffnungen 14 ausgestanzt, die durch die gesamte Dicke des Streifens 12 greifen. An den mit den Öffnungen 14 versehenen Stellen des Folienapplikationsstreifens 12 ist dann für den Betrachter die Oberfläche der Banknote sichtbar. Der Folienapplikationsstreifen 12 wird durch die Öffnungen 14 um ein haptisches Echtheitskennzeichen ergänzt. Zusätzlich können die freiliegenden Oberflächenbereiche in den Öffnungen 14 mit weiteren Sicherheitsmerkmalen ausgestattet sein, wie nachfolgend genauer beschrieben.

In Fig. 2 sind die Öffnungen 16 in dem Hologramm-Folienapplikationsstreifen 12 in Form der Zahl "100" ausgebildet, die die Denomination der Banknote 10 angibt. Der Folienapplikationsstreifen 12 ist auf einem Flächenbereich der Banknote 10 aufgeklebt, auf den zuvor eine Sicherheitsschicht 18 aufgedruckt wurde. Die Sicherheitsschicht 18 ist durch eine fluoreszierende Partikel enthaltende Druckschicht gebildet, deren Emisionswellenlänge der einfachen Erkennbarkeit halber im sichtbaren Spektralbereich gewählt ist.

Die fluoreszierenden Partikel der Druckschicht sind im Bereich der Öffnungen 16 erkennbar und können bei der Überprüfung der Echtheit der Banknote 10 beispielsweise mithilfe einer geeigneten Anregungsquelle, etwa einer UV-Lampe, zum Leuchten gebracht werden. Das Fehlen dieses Lumineszenzmerkmals kann von einem Betrachter oder einer automatischen Leseeinrichtung leicht erkannt und auf eine Manipulation oder Nachbildung der Banknote 10 geschlossen werden. Zugleich bilden die Öffnungen 16 aufgrund ihrer Form ein charakteristisches haptisches Erkennungsmerkmal, das auch ohne Überprüfung der Lumineszenz zur Echtheitsprüfung herangezogen werden kann.

Eine weitere Banknote ist in Fig. 3 gezeigt. Dort ist der von einer lumineszierenden Sicherheitsschicht 20 bedruckte Flächenbereich der Banknote 10 etwas größer als der Folienapplikationsstreifen 12 selbst ausgebildet, so dass ein außerhalb des Streifens 12 liegender Lumineszenzbereich 22 entsteht. Dieser ermöglicht eine einfache maschinelle Echtheitsprüfung, da das Lumineszenzsignal der Bereiche 22 einem Lesegerät anzeigt, wo die Öffnungen 24, 26 des Folienapplikationsstreifens 12 zu suchen sind.

Der Folienapplikationsstreifen 12 enthält neben einer großflächigen Öffnung 24 auch eine Reihe von Mikroöffnungen 26, die so angeordnet sind, dass sie die Denomination der Banknote 10 darstellen. In der Fig. 3 ist die Größe der Mikroöffnungen 26 der Deutlichkeit halber übertrieben dargestellt. Tatsächlich können die Mikroöffnungen einen Durchmesser von 100 µm oder weniger, oder sogar von 50 µm oder weniger aufweisen.

Liegt, wie bei Fig. 2, die Emissionswellenlänge der Lumineszenzpartikel im sichtbaren Spektralbereich, kann die großflächige Öffnung 24 als leicht erkennbares visuelles Echtheitskennzeichen für einen Betrachter dienen. Das Lumineszenzsignal der Mikroöffnungen 26 ist dagegen aufgrund des geringen Durchmessers der Öffnungen 26 schwach, und nur mit geeigneten Detektoren in einem Lesegerät nachzuweisen. Die Lumineszenzstrahlung der großflächigen Öffnung 24 kann bei der Echtheitsprüfung als Referenzsignal dienen, auf das das erwartete schwache Signal der Mikroöffnungen kalibriert wird. Die Lumineszenz der Mikroüffnungen 26 ist für Dritte schwer zu reproduzieren und trägt somit zu einer hohen Fälschungssicherheit der Banknote 10 bei.

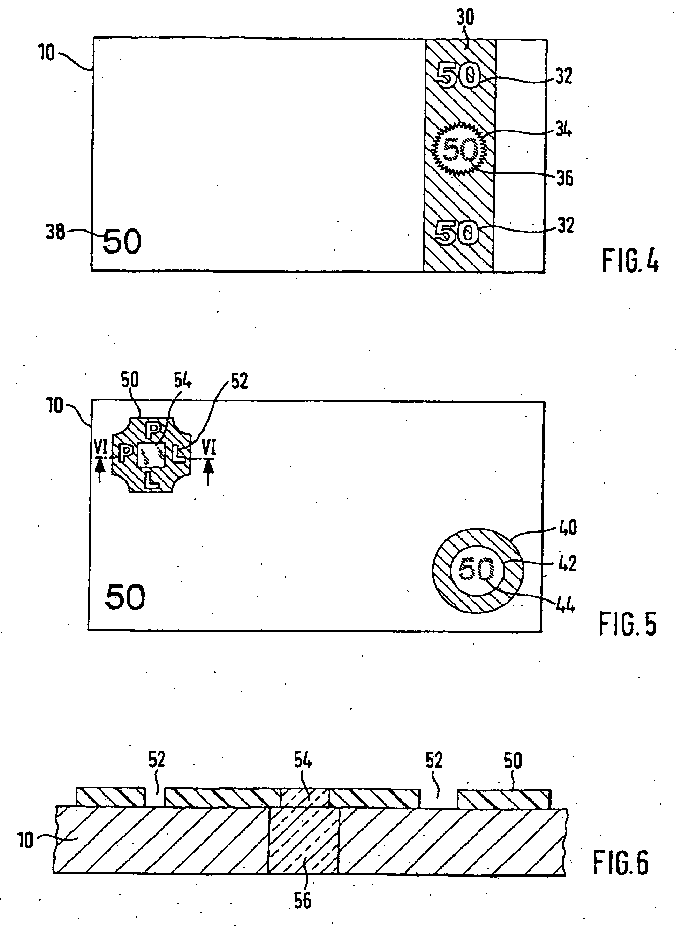

Fig. 4 zeigt eine Banknote, bei der ein Hologramm-Folienapplikationsstreifen 30 mit Fensterbereichen 32, 34 auf der Banknote 10 aufgebracht ist. Anders als bei den oben beschriebenen Banknoten stellen die Fensterbereiche 32, 34 keine Ausnehmungen im Folienmaterial dar, sondern sind durch demetallisierte und damit transparente Bereiche in der ansonsten opaken Metallschicht des Folienstreifens 30 gebildet.

Die beiden Fensterbereiche 32 sind in Form des Zahlenwerts der Denomination der Banknote ausgebildet, in Form der Zahl "50", und geben den Blick auf die Oberfläche der Banknote 10 frei. Die Fensterbereiche 32 bilden damit eine auffällige Negativinformation in dem ansonsten mit optisch variablen Effekt erscheinenden Hologrammstreifen 30. Die Banknotenoberfläche unterhalb der Fensterbereiche 32 kann unbehandelt sein, oder mit einer Farbschicht oder einer Effektschicht, wie etwa einer lumineszierende oder optisch variable Partikel enthaltenden Schicht, versehen sein.

Der Hologrammstreifen 30 enthält weiter einen großflächigen Fensterbereich 34, der im Register zu einem in das Banknotenpapier eingebetteten Wasserzeichen 36 angeordnet ist. Das Wasserzeichen 36 stellt ebenfalls den Zahlenwert der Währungsdenomination dar, so dass durch einen Vergleich des Wasserzeichens 36, der Fensterbereiche 32 und der aufgedruckten Denomination 38 die Echtheit der Banknote überprüft werden kann. Der Rand des großflächigen Fensterbereichs 34 ist mit einer kleinräumigen Struktur versehen, um die Nachahmung und Reproduktion des Hologrammstreifens 30 weiter zu erschweren.

Fig. 5 zeigt eine Banknote 10 mit zwei verschiedenen Folienapplikationselementen 40 bzw. 50 in Patchform. Das Patchelement 40 entspricht in seinem Aufbau weitgehend dem oben beschriebenen Hologrammstreifen 30. Ein zentraler Fensterbereich 42 des Hologrammpatches 40 gibt den Blick auf ein Wasserzeichen 44 frei, relativ zu welchem der Hologrammpatch 40 auf der Banknote registerhaltig angeordnet ist. Der Fensterbereich 42 ist durch einen demetallisierten Bereich des Hologrammpatches 40 gebildet. Es ist jedoch ebenso möglich, den Hologrammpatch 40 mit einer Ausstanzung gleicher Größe zu versehen, die das Wasserzeichen 44 freilegt.

Das Patchelement 50 weist neben durchgehenden Öffnungen 52 in Buchstabenform einen transparenten zentralen Fensterbereich 54 auf. Wie am besten in Zusammenschau mit der Figur 6 zu erkennen, die einen Querschnitt der Banknote im Bereich des Patchelements 50 zeigt, weist die Banknote unterhalb des Fensterbereichs 54 einen transluzenten Bereich 56 auf.

Der transluzente Bereich 56 kann etwa durch das Einwirken einer geeigneten Substanz auf das Banknotenpapier erzeugt werden. Dazu wurde konzentrierte Schwefelsäure verwendet. Durch die Kombination des Fensterbereichs 54 des Patchelements mit dem transluzenten Bereich 56 der Banknote entsteht ein charakteristischer, im Durchlicht hell aufscheinender Bereich im Inneren des Patchelements 50.

## Patentansprüche

1. Datenträger, wie Banknote Wertpapier oder Ausweiskarte, mit einem auf seiner Oberfläche angeordneten Foliensicherheitselement (12; 30; 40; 50), wobei
das Foliensicherheitselement ein mit einem Sicherheitsmerkmal versehenes Foliensubstrat aufweist und das Foliensicherheitselement einen Durchbrechungsbereich mit zumindest einer das Element durchbrechenden Aussparung aufweist,
der Datenträger einen mit dem Durchbrechungsbereich des Foliensicherheitselements deckungsgleichen Durchbrechungsbereich aufweist, und
der Durchbrechungsbereich im Datenträger von der Seite, die von der Datenträgerseite, die das Foliensicherheitselement trägt, abgewandt ist, mit einer weiteren Folie abgedeckt ist.

2. Datenträger nach Anspruch 1, wobei der Durchbrechungsbereich des Foliensicherheitselements eine Mehrzahl von das Element durchbrechenden Aussparungen (14, 26) in Form von Mustern, Zeichen oder Codierungen aufweist.

3. Datenträger nach Anspruch 1 oder 2, wobei das Foliensicherheitselement (12; 30; 40; 50) einen Sicherheitsstreifen oder einen Sicherheitsfaden bildet.

4. Datenträger nach einem der Ansprüche 1 bis 3, wobei der Durchbrechungsbereich des Foliensicherheitselements (12; 30; 40; 50) visuell und/ oder maschinell erfassbare Informationen bildet, die zu anderen Informationen auf dem Datenträger (10) oder dem Foliensicherheitselement (12; 30; 40; 50) inhaltsgleich sind oder diese ergänzen.

## Claims

1. A data carrier, such as a banknote, value paper or identification card, having a foil security element (12; 30; 40; 50) arranged on its surface, wherein
the foil security element has a foil substrate furnished with a security feature, and the foil security element has a break-through region with at least one gap breaking through the element,
the data carrier has a break-through region that is congruent with the break-through region of the foil security element, and
the break-through region in the data carrier is covered with a further foil from the side that faces away from the data carrier side carrying the foil security element.

2. The data carrier according to claim 1, wherein the break-through region of the foil security element has a plurality of gaps (14, 26) breaking through the element in the form of patterns, symbols or codings.

3. The data carrier according to claim 1 or 2, wherein the foil security element (12; 30; 40; 50) forms a security strip or a security thread.

4. The data carrier according to any of the claims 1 to 3, wherein the break-through region of the foil security element (12; 30; 40; 50) forms visually and/or machine detectable information items which are identical in content to, or complement, other information items on the data carrier (10) or the foil security element (12; 30; 40; 50).

## Revendications

1. Support de données, tel que billet de banque, papier-valeur ou carte d'identification doté d'un élément de sécurité en pellicule (12; 30; 40; 50) agencé sur sa surface,
l'élément de sécurité en pellicule comportant un substrat en pellicule pourvu d'une caractéristique de sécurité et l'élément de sécurité en pellicule comportant une zone de transpercement ayant au moins un évidement transperçant l'élément,
le support de données comportant une zone de transpercement coïncidant avec la zone de transpercement de l'élément de sécurité en pellicule, et
la zone de transpercement étant, dans le support de données, recouverte par une pellicule supplémentaire du côté tourné à l'opposé de la face du support de données porteuse de l'élément de sécurité en pellicule.

2. Support de données selon la revendication 1, la zone de transpercement de l'élément de sécurité en pellicule comportant une pluralité d'évidements (14, 26) transperçant l'élément sous forme de motifs, signes ou codifications.

3. Support de données selon la revendication 1 ou 2, l'élément de sécurité en pellicule (12; 30; 40; 50) constituant un ruban de sécurité ou un fil de sécurité.

4. Support de données selon une des revendications de 1 à 3, la zone de transpercement de l'élément de sécurité en pellicule (12; 30; 40; 50) constituant des informations qui sont perceptibles visuellement et/ou par machine et dont le contenu est identique à celui d'autres informations se trouvant sur le support de données (10) ou sur l'élément de sécurité en pellicule (12; 30; 40; 50) ou qui complètent ces dernières.
